# EUROPÄISCHE PATENTSCHRIFT

(11) **EP 3 377 368 B1**
(45) Veröffentlichungstag und Bekanntmachung des Hinweises auf die Patenterteilung: **15.01.2020**
(21) Anmeldenummer: 16816259.2
(22) Anmeldetag: 15.12.2016
(51) Int. Cl.: B60P 3/34

(54) **REISEMOBIL**
MOTORHOME
CAMPING-CAR

(30) Priorität: 15.12.2015 DE 102015225269
(43) Veröffentlichungstag der Anmeldung: 26.09.2018
(73) Patentinhaber: Protec GmbH & Co. KG, 82234 Wessling (DE)
(72) Erfinder: WIETH, Franz, 82340 Feldafing (DE)
(74) Vertreter: von Hirschhausen, Helge
(86) Internationale Anmeldenummer: PCT/EP2016/081322
(87) Internationale Veröffentlichungsnummer: WO 2017/103031

(56) Entgegenhaltungen:
- US-A1- 2005 230 990
- US-A1- 2011 025 091
- US-A1- 2012 035 813
- US-A1- 2012 150 394
- US-A1- 2014 138 976

## Beschreibung

Die vorliegende Erfindung betrifft ein Reisemobil mit einer Fahrzeug-längsachse und einem auf einem Fahrzeugchassis angeordneten und sich in Fahrzeuglängsachse erstreckenden Aufbau, der wenigstens ein am Aufbau quer zur Fahrzeuglängsachse verschieblich befestigtes Raumerweiterungsmodul aufweist, weiches sich zumindest annähernd über die gesamte Länge und Höhe einer Längsseite des Aufbaus erstreckt. Ein zumindest annähernd über die gesamte Länge erstreckendes Maß ist im Sinne der Anmeldung zum Beispiel dann gegeben, wenn die Länge des Raumerweiterungsmoduls zumindest dem 0,8-fachen der gesamten Länge des Aufbaus entspricht. Entsprechendes kann man auch für die Höhe ansetzen.

Derartige Reisemobile sind an sich bekannt, siehe z.B. US 2012/0035813 A1. Im Sinne der vorliegenden Erfindung sollen unter einem Reisemobil motorisierte Fahrzeuge, wie etwa Wohnmobile oder Caravane, aber auch nicht-motorisierte Fahrzeuge, wie beispielsweise Anhänger bzw. Wohnwagen, verstanden werden. Dabei ist es im Prinzip egal, für welche Zwecke die Reisemobile eingesetzt werden. Wichtig ist nur, dass diese einen Aufbau aufweisen, der einen für den dauerhaften Aufenthalt von Personen geeigneten Innenraum aufspannt. Denn für die Tragweite der Erfindung ist es grundsätzlich egal, ob das Reisemobil für lange Reisen oder sehr kurze Reisen - etwa innerhalb einer Stadt - eingesetzt wird. Die Erfindung bezieht sich dementsprechend ausdrücklich auf Fahrzeuge, die zu touristischen Zwecken eingesetzt werden, da hier der Nutzen der Erfindung in besonders großem Maße zum Tragen kommt. Dennoch macht die Erfindung auch Sinn in Reisemobilen, die im nicht-touristischen Gebrauch, wie etwa dem Bau- und Schaustellergewerbe, Verkaufsfahrzeuge für z.B. fahrende Lebensmittelläden, oder auch für die Verwendung zu medizinischen Einsatzzwecken, beispielsweise einem medizinischen Blutspendedienst, Verwendung finden. Denkbar ist auch die Verwendung erfindungsgemäßer Reisemobile als mobile Einsatzzentralen, insbesondere für den militärischen oder polizeilichen Einsatz.

Der Begriff Fahrzeuglängsachse ist in diesem Zusammenhang zu verstehen als die Achse, die sich im Wesentlichen durch Bug und Heck des Reisemobils erstreckt, vorzugsweise durch die Mitte des Bugs und die Mitte des Hecks. Die Längsachse verläuft also parallel zur Fahrtrichtung, in der das Reisemobil normalerweise bewegt wird.

Allen Reisemobilen gemein ist, dass der nutzbare Innraumraum des Aufbaus des Reisemobils im Vergleich zu nicht-mobilem Aufenthalts-, Wohn- und/oder Arbeitsraum deutlich kleiner und begrenzter ist. Der Stand der Technik schlägt daher zur Vergrößerung des Innenraums am Aufbau angeordnete, seitliche Raumerweiterungsmodule mit einem schubladenähnlichen Funktionsprinzip vor. Diese auch als Slideouts bezeichneten Raumerweiterungsmodule, bieten die Möglichkeit, den Raum des Aufbaus des Reisemobils durch seitliches Ausschieben eines in der Regel seitlich zur Fahrzeuglängsachse hin offenen Raumteils zu vergrößern. Meist haben solche Slideouts also drei Wände, einen Boden und ein Dach.

Um möglichst großen Raumgewinn zu ermöglichen, erscheint es naheliegend über möglichst die gesamte Länge des Aufbaus reichende Raumerweiterungsmodule zu verwenden. In der Praxis sind derartige Lösungen aber wegen Bedenken hinsichtlich der Antriebe oder der Statik jedoch nur selten umgesetzt worden. Denn derart große Slideouts sind sehr schwer und schon bei kleinen Slideouts findet man heute große und voluminöse Antriebe, die die Nutzbarkeit des Reisemobils deutlich beeinträchtigen. So finden sich bis heute praktisch nur Reisemobile mit Raumerweiterungsmodulen am Markt, deren Breite deutlich kleiner als die Länge des Aufbaus ist. Wenn viel Raum gewonnen werden soll, werden dann mehrere solcher kleineren Raumerweiterungsmodule entlang der betreffenden Seite des Aufbaus angeordnet, z.B. rechts und links von einem Eingang in den Aufbau des Reisemobils.

Die bekannten Reisemobile sind daher noch immer nicht so zufriedenstellend zu nutzen, wie man es sich mit Blick auf nicht-mobilen Nutzraum wünscht. Denn gerade die feststehenden Bereiche der Seiten des Aufbaus zwischen den Slideouts stören die Benutzbarkeit des Reisemobils.

Vor diesem Hintergrund ist es Aufgabe der vorliegenden Erfindung, ein Reisemobil zu schaffen, welches noch besser nutzbar ist, als die bekannten und am Markt erhältlichen, gattungsgemäßen Reisemobile mit wenigstens einem Raumerweiterungsmodul.

Die Lösung der Aufgabe gelingt mit einem Reisemobil gemäß Anspruch 1. Vorteilhafte Weiterbildungen der Erfindung sind in den Unteransprüchen beschrieben.

Das erfindungsgemäße Reisemobil zeichnet sich also gegenüber den eingangs geschilderten Reisemobilen dadurch aus, dass am Aufbau und/oder an einem Raumerweiterungsmodul wenigstens vier Antriebe zur Bewegung des wenigstens einen Raumerweiterungsmoduls quer zur Fahrzeuglängsachse angeordnet sind. Dabei ist das wenigstens eine Raumerweiterungsmodul über jeweils wenigstens vier Führungselemente mit dem Aufbau verschieblich verbunden.

Besonders vorteilhaft ist die Verwendung von wenigstens vier Antrieben und wenigstens vier Führungselementen, die vorzugsweise in den Ecken des Raumerweiterungsmoduls bzw. denen gegenüberliegend am Aufbau befestigt sind, deshalb, weil man so relativ kleine Antriebe und relativ klein bauende Führungselemente verwenden kann, die deshalb wenig stören. Gleichzeitig ermöglichen sie ein Bewegen des Raumerweiterungsmoduls auf besonders sichere Weise, da durch das Ansteuern über vier Bereiche ein Verkanten des Raumerweiterungsmoduls sicher verhindert werden kann.

Weiterbildend sind wenigstens je zwei Antriebe und Führungselemente im Bodenbereich und wenigstens je zwei Antriebe und Führungselemente jeweils oben an der Front- bzw. an der Heckwand angeordnet. Durch die Aufteilung in vier Antriebe hat sich aber gezeigt, dass die Antriebe insgesamt kleiner und leichter werden, was deren Verankerung in Front- und Heckwand erst machbar werden lässt. Hinzukommt, dass die Aufbauten und deren Bestandteile mittlerweile auch mittels entsprechender Schäume verstärkt werden können, so dass störende Tragkonstruktionen vermieden werden können, an denen die Antriebe befestigt werden müssen.

Zweckmäßiger Weise sind die Antriebe elektronisch synchronisiert und weisen vorzugsweise eine lastabhängige Notabschaltung auf. Die elektrische Synchronisation erfolgt üblicherweise mittels einer Steuerung, die die Bewegungen der einzelnen Antriebe so ansteuert, dass das Raumerweiterungsmodul sich gleichmäßig bewegt. Hierzu kann die Steuerung im besten Fall auch beispielsweise die Drehzahlen der Antriebe regeln. Durch die elektronische Synchronisation entfallen teure und auch schwere Synchronisationsgetriebe. Dies hilft weiter, bei der Verkleinerung der als störend empfundenen Antriebstechnik insgesamt und bei der Verlagerung der Antriebe in den oberen Wandbereich von Front- bzw. Heckwand und vorzugsweise in die oberen und unteren Eckbereiche des Aufbaues und der Raumerweiterungsmodule wo sie schon wegen der Randlage weniger stören.

Als Antriebe können mechanisch aber auch hydraulisch, pneumatisch oder elektrisch betriebene Antriebe zur Verwendung kommen. Wenigstens ein Antrieb ist als Spindelantrieb ausgebildet. Die Verwendung eines Spindelantriebs hat den Vorteil, dass er wenig Bauraum benötigt und eine effektive Wandlung einer rotatorischen Bewegung einer Antriebswelle, beispielsweise eines Elektromotors, in eine translatorische Bewegung zur seitlichen Verschiebung der Raumerweiterungsmodule ermöglicht. Ein weiterer besonderer Vorteil von Spindelantrieben sind die hohen Haltekräfte, die in Richtung der Spindellängsachse aufgenommen werden können. Unabhängig von der Auslenkungsposition des Spindelantriebs kann somit gewährleistet werden, dass derartige Kräfte über die Verzahnung des Spindelantriebs geleitet werden können, ohne dass sich eine Relativbewegung zwischen Spindel und dem feststehenden Teil des Antriebs einstellt. Dies ist insbesondere bei hohen Beladungen der Raumerweiterungsmodule vorteilhaft. Der Antrieb kann ferner unter Einbeziehung der Festhaltekraft (Reibung), der in der jeweiligen Endstellung der Ausschübe wirkenden pneumatischen Dichtung ohne weitere Verriegelungsvorrichtung die eingefahrenen Raumerweiterungsmodule im feststehenden Teil des Aufbaus arretieren. Durch die hohe Haltekraft können auch sehr große Beschleunigungskräfte wie sie bei extremer Kurvenfahrten auftreten könnten, sicher aufgenommen werden. Insgesamt sind die Raumerweiterungsmodule mit Spindelantrieben einfach, eindeutig und sicher im feststehenden Teil des Aufbaus verriegelt.

Weiterbildend weisen die einem Raumerweiterungsmodul zugeordneten Antriebe eine Antriebsleistung auf, die in ihrer Gesamtheit maximal so groß ist, dass eine Bewegung des Raumerweiterungsmoduls händisch, vorzugsweise unter Verwendung einer mechanischen Notbetätigungshilfe, möglich ist. Dabei sollte sich die Kraft an der eines durchschnittlichen Benutzers des Reisemobils orientieren und die Dichtung zwischen Aufbau und Raumerweiterungsmodul nicht unter Druck anliegen. Dann ist sichergestellt, dass auch bei einem Ausfall der Antriebe das wenigstens eine Raumerweiterungsmodul noch verschoben werden kann. Dies ist insbeondere bei Ausfall im ausgefahrenen Zustand von großer Bedeutung. Da nur so sichergestellt ist, dass man auch bei Ausfall der Antriebstechnik des wenigstens einen Raumerweiterungsmoduls das Reisemobil noch sicher im Straßenraum bewegt werden kann.

Erfindungsgemäß weist das Führungselement jeweils eine Führungsschiene mit einem daran beweglich befestigten Schlitten und ein am Schlitten befestigtes Halteschwert auf. Unter einem Halteschwert soll hierbei ein schmales längliches Bauteil bzw. eine entsprechende Konstruktion verstanden werden. So baut das Führungselement wenig in die Breite und kann sehr platzsparend vorzugsweise sehr weit in die Ecken des Raumerweiterungsmoduls hineingesetzt verbaut werden.

Dabei sind wenigstens eine, bevorzugt alle, Führungsschiene(n) direkt an einer Decke, einer Wand und/oder einem Boden des Aufbaus befestigt ist bzw. sind. Denn nicht zuletzt auch durch die zuvor schon genannten Maßnahmen können die Antriebe und Führungselement sehr klein und leicht gebaut werden. Zudem gibt es mittlerweile sehr feste Schäume mit denen man Aufbauten verstärken kann, so dass die bislang üblichen platzraubenden und schweren Tragkonstruktionen entfallen können.

Dabei ist es vorteilhaft, wenn wenigstens ein, bevorzugt alle, Halteschwert(er) direkt an einer Decke, einer Wand und/oder einem Boden eines Raumerweiterungsmoduls (5,6) befestigt ist bzw. sind. Hier gilt das schon zu den Führungsschienen Gesagte.

Weiterbildend ist im Bereich der Befestigung der Führungsschiene und/oder des Halteschwertes ein Schaumstoff mit erhöhter Festigkeit in der betreffenden Decke, Wand und/oder Boden des Aufbaus und/oder des Raumerweiterungsmoduls angeordnet. So kann man gezielt nur die Befestigungsbereiche mit diesen Schäumen ausrüsten, was ebenfalls Gewicht und Kosten spart.

Sinnvoller Weise weist wenigstens ein Schlitten wenigstens zwei Wälzkörper auf, über die er mit der Führungsschiene in Verbindung steht. Dies hat den Vorteil, dass große Kräfte übertragen werden können und sich dennoch eine geringe Reibung einstellt.

Erfindungsgemäß wird die Verbindung von Schlitten und Halteschwert unter Zwischenschaltung wenigstens eines Justiermittels, vorzugsweise eines Exzenters, erfolgen. So ist es möglich Ungenauigkeiten des Aufbaus oder des wenigstens einen Raumerweiterungsmoduls bei der Montage der Halteschwerter oder der Führungsschienen auszugleichen.

Besonders bevorzugt weist wenigstens ein Halteschwert eine Kröpfung auf. Somit können mehrere Halteschwerter in den besonders stabilen Eckbereichen bei gegenüberliegenden Raumerweiterungsmodulen montiert werden. Auch können die Schwerter dadurch in getrennten Führungsschienen sich in der Länge zur besseren Führung und Lastaufnahme überschneidend angeordnet werden. So kann das Halteschert im besten Fall bündig in die Ecke eines Raumerweiterungsmoduls gesetzt werden und dann seitlich und(oder höhenmäßig versetzt dazu die Führungsschiene. Dies bringt nochmals eine Reduktion störender Einbauten mit sich. Zudem erfolgt so die Befestigung der Führungselemente in einem besonders stabilen Teil des Raumerweiterungsmoduls, in dem ohnehin schon meist Verstärkungsschäume vorgesehen sind. Das spart erneut Gewicht und Kosten.

Erfindungsgemäß ist am Aufbau und an wenigstens einem Raumerweiterungsmodul wenigstens ein Zug- und/oder Druckkräfte aufnehmendes Krafteinleitungsmittel zur Krafteinleitung eines mechanischen Notbetätigungsmittels, insbesondere einer Zug-Druckvorrichtung, vorgesehen ist. Dies kann eine Vorrichtung ähnlich einer Spreize, ein Wagenheber oder auch ein Flaschenzug sein.

Vorteilhafterweise ist ein Raumerweiterungsmodul über wenigstens zwei Führungselemente mit dem Aufbau verschieblich verbunden. Dies können zum Beispiel zwei ineinander schiebbare Schienen sein, von denen eine Schiene am feststehenden Teil des Aufbaus und eine am beweglichen Raumerweiterungsmodul angebracht ist. Gerade durch ineinander schiebbare Führungselemente gelingt eine besonders platzsparende Befestigung des Raumerweiterungsmoduls.

Des Weiteren ist es zweckmäßig, dass der Antrieb und die Führungselemente jeweils in einer Baugruppe zusammengefasst sind. Derartige Baugruppen lassen sich leicht verbauen.

Vorteilhafterweise ist die Baugruppe vorzugsweise im Innenraum des feststehenden Teils des Aufbaus und/oder zumindest eines Raumerweiterungsmoduls angeordnet. Dies dient der Abschirmung der Baugruppe vor Umwelteinflüssen.

Dabei kann es auch sinnvoll sein, wenn im Aufbau des wenigstens einen Raumerweiterungsmoduls ein Teil der Möblierung so angeordnet ist, dass wenigstens ein Viertel, vorzugsweise ein Drittel des Bruttovolumens der Möblierung des Aufbaus an dem wenigstens einen Raumerweiterungsmodul befestigt ist.

Der Begriff der Möblierung ist hierbei breit zu verstehen. Darunter soll im Sinne der Erfindung alles das fallen, was im Aufbau angeordnet und zum dauerhaften Verbleib dort befestigt ist. Dies sind also insbesondere alle Einbauten, die nicht zum Abschluss des Innenraums nach außen beitragen, also insbesondere nicht die Wände, der Boden und/oder das Dach des Aufbaus. So fallen unter den Begriff der Möblierung insbesondere im Aufbau befestigte Küchenmöbel, Sitzmöbel, Liegemöbel, Betten, Schränke, Tische aber auch Nasszellen, Duschkabinen, Toilettenkabinen, Garagen, Stauboxen, etc..

Der Begriff Bruttovolumen soll im Sinne der Erfindung so verstanden werden, dass er das Produkt aus der Grundfläche der Möblierung, multipliziert mit der maximalen Höhe der Möblierung ist. Dabei soll als Grundfläche die Fläche verstanden werden, die der aus der Vertikalen gesehenen Projektionsfläche der Möblierung entspricht. Dabei kann das Volumen auch aus der Summe von Teilvolumen einzelner Möbel bzw. Teile der Möblierung gebildet werden.

Damit sind die bislang immer gefürchteten Probleme mit den Antrieben oder der Statik der Slideouts mit geringeren Eingriffen in die Nutzbarkeit des Aufbaus zu lösen, als die Nutzung diverser Slidouts Eingriffe bei der Nutzbarkeit des Aufbaus mit sich bringen. Insofern kann man nun in klarer Abkehr von den bisherigen Lösungsansätzen nicht nur einen sich zumindest annähernd über die Länge das Aufbaus erstreckenden Slideout statt vieler kleiner vor, sondern dieser soll nun entgegen aller bisherigen Ansätze gezielt möglichst viel möbliert werden. Dies bringt eine deutlich größere Belastung des zumindest einen Raumerweiterungsmoduls mit sich, da ein sehr großer Teil der Möblierung in selbigem gezielt vorgesehen ist. Dadurch wird ein deutlich besser vergrößerbarer und besser praktisch nutzbarer Innenraum im Aufbau geschaffen. Denn störende, feststehende Teile, wie etwa Teile der Außenwände des Aufbaus, zwischen einzelnen Slideouts können entfallen.

Dabei ist zu berücksichtigen, dass sich der Slideout in der Regel nicht vollständig über die gesamte Länge des Aufbaus erstrecken kann, weil der feststehende Teil des Aufbaus eine gewisse konstruktive Stärke an seinen Rändern benötigt. Insofern ist die Formulierung zumindest annähernd über die gesamte Länge einer Längsseite des Aufbaus so zu verstehen, dass sie die gesamte Seitenfläche des Aufbaus abzüglich einer etwaigen Randstruktur des feststehenden Teils des Aufbaus meint. Der Begriff kann sich jedoch auch auf eine maximal verfügbare Länge einer Längsseite des Aufbaus beziehen. Beispielsweise kann es sein, dass sich der im Aufbau ausgebildete Innenraum durch das Vorhandensein eines Motors und/oder einer Kühleinrichtung im Fahrzeugheck nur auf einen Teilabschnitt entlang der Fahrzeug-längsachse ausbildet. In diesem und in einem allgemeinen Fall ist die Längsseite des Aufbaus abzüglich der Länge gemeint, entlang der sich im Innenraum kein Wohnraum ausbildet.

Vorteilhafterweise weist das wenigstens eine Raumerweiterungsmodul ferner zumindest eine Höhe auf, die dem zumindest 0,8-fachen der maximalen lichten Höhe des Innenraums des Aufbaus entspricht. Die lichte Höhe bezieht sich dabei auf den Abstand zwischen Boden und Decke des Innenraums; nicht jedoch auf die Höhe, die sich beispielsweise an Stellen mit einer Lichtkuppel oder anderen an der Decke oder Boden ausgebildeten An- oder Einbauten. Ein Vorteil dieser Weiterbildung ist die Möglichkeit, dass in einem ausgefahrenen Zustand des zumindest einen Raumerweiterungsmoduls am Boden und/oder an der Decke nur geringe Höhenunterschiede an Übergängen zwischen Aufbau und Raumerweiterungsmodul vorhanden sind. Es kommt zu praktisch keinen die Nutzbarkeit spürbar einschränkenden Sprüngen im Boden oder in der Decke des Aufbaus.

Zweckmäßiger Weise weist der Aufbau ein erstes Raumerweiterungsmodul und ein ihm gegenüberliegend angeordnetes zweites Raumerweiterungsmodul auf. Dabei erstrecken sich beide jeweils zumindest annähernd über die gesamte Länge und Höhe einer Längsseite des Aufbaus, wobei ein Teil der Möblierung des Aufbaus in den beiden Raumerweiterungsmodulen so angeordnet ist, dass wenigstens zwei Drittel des Bruttovolumens der Möblierung des Aufbaus an den beiden Raumerweiterungsmodulen befestigt ist. Vorteilhaft bei dieser Anordnung ist, dass anhand dieser Anordnung ein Großteil der Möblierung aus der Mitte des Aufbaus seitlich nach außen verschoben werden kann, wodurch ein deutlicher Raumgewinn in der Mitte des Fahrzeugs bei ausgefahrenen Slideouts hervorgeht.

Ferner ist es vorteilhaft, dass die Möblierung des Aufbaus so gestaltet und/oder angeordnet ist, dass ein Durchgang zu wenigstens einer oder einem im Aufbau angeordneten Küche, Dusche, Toilette, Bett und/oder Bad frei von Möblierung bleibt, wenn das oder sämtliche Raumerweiterungsmodule vollständig in den Aufbau verschoben ist oder sind. Dadurch wird gewährleistet, dass auch im, in den feststehenden Teil des Aufbaus eingefahrenen Zustand des zumindest einen Raumerweiterungsmoduls ein Mindestmaß an Erreichbarkeit der vorhandenen Einrichtungsgegenstände aufrechterhalten bleibt. Das Reisemobil bleibt so zumindest in Teilen wie ein herkömmliches Reisemobil ohne Slideout auch während der Fahrt oder in einem Zustand mit eingefahrenen Raumerweiterungsmodulen gut nutzbar.

Zweckmäßigerweise weist wenigstens ein Raumerweiterungsmodul eine maximale Tiefe auf, die der maximalen Tiefe eines Küchenmöbels, eines Betts und/oder eines Sitzmöbels entspricht. Dadurch kann erreicht werden, dass am Boden zwischen dem Raumerweiterungsmodul und dem Aufbau keine Stufe oder kein Vorsprung vorhanden ist, die oder der optisch oder ergonomisch nachteilig sein könnte.

Ferner ist es vorteilhaft, wenn wenigstens ein Raumerweiterungsmodul eine maximale Tiefe aufweist, die kleiner als die Hälfte der Breite des Aufbaus ist. Eine derartige Anordnung ermöglicht insbesondere, dass die Raumerweiterungsmodule gegenüberliegend derart angeordnet sein können, dass sie jeweils die gleiche Tiefe aufweisen und im Extremfall jeweils annähernd die Hälfte der verfügbaren Breite des Aufbaus in Anspruch nehmen. Entsprechend kann bei einer derartigen Weiterbildung fast eine Verdopplung des nutzbaren Wohnraums erzielt werden, bei gleichzeitig zumindest weitgehend ausgeglichener Statik.

Vorteilhafterweise sind zwei im Aufbau gegenüberliegend angeordnete Raumerweiterungsmodule so ausgestaltet, dass die Summe der Tiefen der beiden gegenüberliegenden Raumerweiterungsmodule kleiner als die Innenbreite des Aufbaus abzüglich einer Durchgangsbreite ist, von vorzugsweise mindestens 50 cm Breite. Diese Weiterbildung zielt darauf ab, dass im Aufbau stets ein Gang ausgebildet ist, so dass Benutzer bzw. Passagiere des Reisemobils sich auch dann durch den Aufbau bewegen können, wenn die Raumerweiterungsmodule in den Aufbau hinein gefahren sind. So können Passagiere zum Beispiel während der Reise Teile der Möblierung - wie etwa ein Bett oder eine Toilette - erreichen, selbst wenn diese im hinteren Teil des Fahrzeugs angeordnet ist.

Ein weiterer Vorteil ist die Möglichkeit in diesem Bereich zumindest teilweise Teile der Möblierung am Aufbau und/oder am Fahrzeugchassis anzubringen. Konkret können dies zum Beispiel Sitzmöbel mit Personenrückhaltesystemen sein.

Zweckmäßigerweise ist im Aufbau wenigstens ein Möbel so angeordnet und ausgestaltet, dass es sich quer zur Fahrzeuglängsachse so erweitern und/oder verschieben lässt, dass es sich zumindest teilweise in ein Raumerweiterungsmodul hineinerstreckt. Ein Vorteil dieser Weiterbildung ist die Integration von flexibel erweiterbarer oder verschiebbarer Möblierung in den Innenraum des Aufbaus. Dadurch kann der durch das Raumerweiterungsmodul gewonnene Raum entweder als Nutzraum für ein Möbel, oder als zusätzlicher Freiraum durch die Verschiebung eines Möbels gewonnen werden.

Ferner ist es vorteilhaft, dass in oder an dem ersten Raumerweiterungsmodul ein Eingang und wenigstens eine Aufstiegshilfe, eine Küchenzeile, ein Kühlschrank, ein Schrank, ein Bad, eine Toilette und/oder ein Bett angeordnet sind. Anstelle von Bad oder Toilette kann auch eine Nasszelle angeordnet werden, die sowohl eines der beiden, oder beide Komponenten umfasst. Auch eine Dusche soll unter den Begriff Nasszelle subsummierbar sein. Eine Nasszelle ist aufgrund seiner üblicherweise modulartigen, abgeschlossenen Bauart im Wesentlichen als ein einzelnes Möbel zu verstehen. Eine Nasszelle umfasst wenigstens eine Wasserzufuhr- und einer Wasserabfuhrvorrichtung sowie eine im Wesentlichen wasserdicht verschließbaren Bewandung der Nasszelle. Der Begriff Küchenzeile stellt in diesem Zusammenhang auf wenigstens einen Küchenschrank und/oder eine Arbeitsfläche, etwa mit einer Spüle und/oder einer Herdplatte, ab. Gleichwohl kann die Küchenzeile jedoch auch weitere Komponenten beinhalten, insbesondere einen Kühlschrank, einen Backofen, einen Wassertank, einen Boiler, eine Spülmaschine, eine Waschmaschine oder einen Abfallbehälter. Gerade die gezielte Kombination der genannten Gegenstände in oder an dem ersten Raumerweiterungsmodul hat sich als vorteilhaft erwiesen, da so ein großer funktional gut zusammenpassender Teil der Möblierung in den Slideout verlegt wird.

Gemäß einer anderen Weiterbildung der Erfindung ist es vorteilhaft, dass im zweiten Raumerweiterungsmodul ein Schrank und wenigstens ein Sitzmöbel, ein Bad, eine Toilette und/oder ein Bett angeordnet sind. Eine derartige Kombination der genannten Gegenstände in dem zweiten Raumerweiterungsmodul hat sich ebenfalls als besonders vorteilhafte funktionale Kombination großer Teile der Möblierung erwiesen.

Zweckmäßigerweise weist das Reisemobil wenigstens ein Bett in einem Raumerweiterungsmodul auf, das so angeordnet ist, dass es sich in seiner Längsrichtung parallel zur Fahrzeuglängsachse erstreckt und vorzugsweise quer zur Fahrzeuglängsachse erweiterbar ausgeführt ist. Dadurch kann erreicht werden, dass das Bett in einer ausgefahrenen Position der Raumerweiterungsmodule die volle Liegefläche ausbildet, wodurch beispielsweise ein erweiterter Mittelgang oder Raum für weitere Möbel erreicht werden kann. Alternativ kann das Bett jedoch auch in seiner Längsrichtung quer zur Fahrzeuglängsachse in einem Raumerweiterungsmodul angeordnet und vorzugweise quer zur Fahrzeuglängsachse erweiterbar ausgeführt sein. Gleichwohl kann es vorteilhaft sein, ein nicht erweiterbares Bett in einem Raumerweiterungsmodul so anzuordnen, dass es sich in seiner Längsrichtung quer zur Fahrzeuglängsachse erstreckt. Dadurch kann sich das Bett beispielsweise in einer eingefahrenen Position des zumindest einen Raumerweiterungsmoduls annähernd vollständig über die gesamte Breite des Fahrzeugchassis erstrecken, wobei erst im ausgefahrenen Zustand des Raumerweiterungsmoduls ein Mittelgang entlang der Fahrzeuglängsachse ausgebildet wird. Im Allgemeinen ist unter einem Bett eine Schlafgelegenheit für zumindest eine Person zu verstehen, jedoch ist es auch denkbar, dass das Bett als Doppelbett, Stockbett oder Bahre ausgeführt ist, mit und ohne Vorrichtung zur Fixierung von Personen.

Ferner ist es vorteilhaft, wenn ein Bett so im nicht verschieblichen Teil des Aufbaus angeordnet ist, dass es sich in seiner Längsrichtung parallel zur Fahrzeuglängsachse erstreckt. Dann erfolgt eine Erweiterung des Bettes quer zur Fahrzeuglängsachse nicht zu quer zur Körperachse der ruhenden Person, sondern parallel dazu. Dies reduziert störende Spalten in der Liegefläche.

Vorteilhafterweise ist in wenigstens einem Raumerweiterungsmodul des Reisemobils als Sitzmöbel eine Sitzbank so angeordnet und ausgebildet, dass diese zumindest teilweise um eine horizontale Schwenkachse verschwenkbar ist. Ein Vorteil dieser Anordnung ist die Möglichkeit, im ausgefahrenen Zustand des wenigstens einen Raumerweiterungsmoduls entweder einen Zugewinn an nutzbarem Wohnraum zu erhalten, oder den zur Fahrzeuglängsachse quer erweiterten Raum als erweiterte Sitzfläche zu nutzen.

Zweckmäßigerweise ist wenigstens unter einem Teil eines Sitzmöbels des Reisemobils ein Gurtbock an einem tragenden Bauteil des Reisemobils befestigt, an dem seinerseits wenigstens ein Rückhaltesystem für wenigstens einen Passagier angeordnet ist. So kann das Sitzmöbel während der Fahrt als Passagiersitz genutzt werden.

Des Weiteren ist es zweckmäßig, dass im nicht verschieblichen Teil des Aufbaus des Reisemobils ein sich in seiner Längsachse quer zur Fahrzeuglängsachse erstreckende Dinette angeordnet ist, die vorzugsweise verschieblich, schwenkbar und/oder höhenverstellbar ausgeführt ist. Analog zu dem Sitzmöbel kann durch eine derartige Anordnung eine flexible und raumoptimierte Nutzung des Innenraums des Reisemobils erreicht werden. Der Begriff Dinette stellt dabei insbesondere auf eine Möbelgruppe umfassend wenigstens ein Sitzmöbel, das neben und/oder zumindest teilweise um einen Tisch angeordnet ist. Dabei kann bzw. können entweder das Sitzmöbel und/oder der Tisch so verstellbar, verschieblich und/oder klappbar ausgeführt sein, dass eine Sitzgelegenheit mit Tisch, eine Sitzgelegenheit ohne Tisch oder eine Liegefläche erzeugt werden können.

Vorteilhafterweise ist in einem Raumerweiterungsmodul des Reisemobils ein von außen zugänglicher Staukasten, vorzugsweise unterhalb von einem Bett, angeordnet. Der Begriff Staukasten ist erneut breit zu verstehen. Dies kann ein beliebig gearteter Stauraum sein. So soll darunter auch eine Garage für ein Fahrzeug, beispielsweise einen Kleinwagen, ein Zweirad oder auch einen Jet-Ski oder ein Schneemobil verstanden werden. Durch die erfindungsgemäße Anordnung ist gewährleistet, dass ein Gegenstand, welcher in dem Raumerweiterungsmodul abgestellt ist, stets von einer Außenseite des Reisemobils erreichbar ist. Beispielsweise kann eine Garage derart ausgeführt sein, dass ein Zugang zum Staukasten nur in ausgefahrenem Zustand des Raumerweiterungsmoduls möglich ist. Es ist jedoch auch möglich, den Staukasten bzw. die Garage derart auszugestalten, dass ein Ein- und Ausparken sowohl im eingefahrenen als auch im ausgefahrenen Zustand des Raumerweiterungsmoduls möglich ist.

Ferner ist es vorteilhaft, dass im nicht verschieblichen Teil des Aufbaus des Reisemobils wenigstens ein in Bezug auf seine Breite teleskopisch und/oder faltbar aufgebautes Wandelement angeordnet ist, welches vorzugsweise so im Aufbau befestigt ist, dass es sich zumindest zweiteilig um eine vertikale Schwenkachse verschwenken lässt. Dadurch wird gewährleistet, dass unabhängig von der Position des Raumerweiterungsmoduls eine Bewandung hergestellt werden kann. Das Wandelement kann sich dabei vorzugsweise quer zur Fahrzeuglängsachse ausbilden und sich ganz oder teilweise über den gesamten Querschnitt des Reisemobils erstecken.

Vorteilhafterweise ist im nicht verschieblichen Teil des Aufbaus des Reisemobils ein als Doppelbett ausgebildetes Bett angeordnet, wobei das Bett vorzugsweise symmetrisch zur Fahrzeuglängsachse und im in Fahrtrichtung des Reisemobils hinten liegenden Teil des Aufbaus angeordnet. Auf diese Weise kann das Doppelbett sowohl im eingefahrenen als auch im ausgefahrenen Zustand der Raumerweiterungsmodule gleichermaßen genutzt werden.

Des Weiteren ist es zweckmäßig, dass das als Doppelbett ausgebildete Bett so ausgeführt ist, dass es zumindest teilweise in wenigstens ein Raumerweiterungsmodul hineinragt, wenn dieses in den Aufbau vollständig hineinverschoben ist oder wenn die Raumerweiterungsmodule in den Aufbau hineinverschoben sind. So ergibt sich selbst bei einem relativ breiten Bett immer noch eine gute Raumausnutzung, wobei die an den Längswänden der Slideouts angeordneten Schränke so ausgebildet sind, dass deren Tiefe im Bereich der Matratze sowie der Liegefläche darüber, etwa halb so tief wie unterhalb und oberhalb ist. (Der Unterbau des Bettes ist ca.50cm schmäler als die Matratze und Rost).

Vorteilhafterweise ist im nicht verschieblichen Teil des Aufbaus des Reisemobils ein Bad angeordnet, wobei das Bad vorzugsweise symmetrisch zur Fahrzeuglängsachse und im in Fahrtrichtung des Reisemobils hinten liegenden Teil des Aufbaus angeordnet ist.

Zweckmäßigerweise ist in der Küchenzeile des Reisemobils wenigstens ein Kühlschrank, ein Spülbecken und ein Herd angeordnet. Diese Gegenstände bilden die Kernelemente dessen, was landläufig als Küche bezeichnet wird.

Ferner ist es vorteilhaft, dass wenigstens ein Raumerweiterungsmodul wenigstens eine beweglich, verschiebbar und/oder teleskopierbar ausgeführte Ver- und/oder Entsorgungsleitung aufweist. Durch das Vorhandensein der besagten Komponenten wird sichergestellt, dass verschiedene Medienströme zwischen dem Fahrzeugchassis und dem wenigstens einen Raumerweiterungsmodul ausgetauscht werden können. Der Begriff Ver- und/oder Entsorgungsleitung stellt insbesondere auf Wasserleitungen, Gasleitungen und/oder elektrische Leitungen ab. Vorteilhafterweise weist wenigstens ein Raumerweiterungsmodul des Reisemobils wenigstens eine Ver- und/oder Entsorgungsleitung auf, die zumindest im Bereich eines Bodens des Raumerweiterungsmoduls außerhalb des Raumerweiterungsmoduls verlaufend angeordnet ist. Die Anordnung der Ver- und/oder Entsorgungsleitung außerhalb des Raumerweiterungsmoduls erlaubt eine im Innenraum nicht störende Führung der Leitung aber auch eine einfachere Wartung der Ver- und/oder Entsorgungsleitung.

Des Weiteren ist es zweckmäßig, dass wenigstens ein Raumerweiterungsmodul einen Tank aufweist. Der Begriff Tank stellt dabei auf ein Vorratsbehältnis zur Bevorratung von festen, flüssigen und/oder gasförmigen Medien ab. Dabei kann der Tank in beliebiger Weise am, im, auf oder unter dem Raumerweiterungsmodul befestigt sein.

Es ist von Vorteil, eine Aufstiegshilfe über eine Führung verschieblich am Fahrzeugchassis und/oder am Aufbau zu befestigen und vorzugsweise als ausklappbare Treppe auszubilden. Die Aufstiegshilfe kann eine stufen-, rampen- und/oder leiterartigen Struktur aufweisen, die beweglich und/oder fest am oder im Reisemobil angeordnet ist. Sinnvoller Weise ist die Aufstiegshilfe unterhalb einer Tür oder einer Zutrittsöffnung zum Innenraum des Aufbaus angeordnet, wodurch ein Betreten und Verlassen des Innenraums des Reisemobils über das erste Raumerweiterungsmodul ermöglicht wird.

Vorteilhafterweise ist zwischen dem feststehenden Teil des Aufbaus und einem Raumerweiterungsmodul wenigstens ein Gleitlager zur gleitenden Lagerung des Raumerweiterungsmoduls angeordnet, das vorzugsweise einen Gleitkörper aus einem Gleitwerkstoff, insbesondere PTFE, aufweist, der mit einer ihm gegenüberliegend angeordneten Gleitfläche zusammenwirkt. Unter einem Gleitwerkstoff ist ein Werkstoff zu verstehen, der im Zusammenspiel mit der Gleitfläche eine Reibkraftminderung bewirkt. Die Gleitfläche ist vorteilhafterweise aus einem abriebfesten Material gefertigt, insbesondere einem metallischen Werkstoff. Besonders vorteilhaft ist die Ausgestaltung der Gleitfläche aus einem Edelstahl, welcher witterungsbeständig ist und eine dauerhaft abriebfeste Gleitfläche gewährleistet. Ferner kann der Gleitkörper auch als Wälzkörper ausgebildet sein, welcher auf der Gleitfläche abwälzt.

Zweckmäßigerweise ist zwischen dem feststehenden Teil des Aufbaus und einem Raumerweiterungsmodul wenigstens ein Rollenlager zur Lagerung des Raumerweiterungsmoduls angeordnet. Dies hat den Vorteil, dass der darunter liegende Boden des feststehenden Teils des Aufbaus durch das Abrollen geschont wird. Gerade wenn es sich beim Boden um einen kratzempfindlichen Boden handelt, macht diese Ausgestaltung des Lagers Sinn. Dabei ist es zweckmäßig entlang möglichst der gesamten Kante des Raumerweiterungsmoduls den Druck zu verteilen. Dies kann durch eine sehr breite oder aber auch viele kleine Rollen geschehen. Auch ist es sinnvoll eine Materialeigenschaft der Rolle (z.B. harte oder weiche Rolle) auf die Bodenbeschaffenheit des Bodens des feststehenden Teils des Aufbaus abzustellen. Dies mit dem Ziel Druckstellen oder Laufspuren im Boden möglichst zu vermeiden.

Vorteilhafterweise ist zwischen dem feststehenden Teil des Aufbaus und einem Raumerweiterungsmodul zumindest bereichsweise ein Schmutzabweiser und eine Dichtung, vorzugsweise eine aufblasbare Dichtung, angeordnet. Die Dichtung ist dabei zwischen dem Schmutzabweiser und dem Innenraum angeordnet. Mit Hilfe dieser zweistufigen Abdichtung des Innenraums vor äußeren Einflüssen, insbesondere Schmutz, Feuchtigkeit und Wärme, ergibt sich ein zuverlässiges Dichtsystem. Der Begriff Schmutzabweiser stellt in diesem Zusammenhang eine berührende Dichtung, insbesondere eine Dichtlippe dar, die so ausgeführt ist, dass Schmutz wie beispielsweise Laub oder Sand nicht bis zur eigentlichen Dichtung dahinter gelangen. Denkbar ist hier die Verwendung einer elastischen Dichtlippe aus einem flexiblen Material wie beispielsweise Gummi oder dergleichen. Alternativ kann auch eine bürstenartige Struktur zur Verwendung kommen.

Die aufblasbare Dichtung (der Begriff ist breit zu verstehen und soll auch durch Vakuum während des Verfahrens der Raumerweiterungsmodul entlastete Dichtungen umfassen) kann vorzugsweise als umlaufende Dichtung ausgeführt sein, wobei zumindest die beiden Seitenspalten sowie die Dachspalte von der umlaufenden Dichtung abgedichtet werden. Denkbar ist jedoch auch die Verwendung einzelner Dichtungssegmente, die die Gesamtlänge der Spalte in einzelne Dichtsegmente unterteilen. Ferner ist es jedoch auch möglich, die Dichtung als starres Bauteil auszuführen, welches entweder am Raumerweiterungsmodul oder am nicht-verschieblichen Teil des Aufbaus des Reisemobils befestigt ist. Ebenso kann der Schmutzabweiser entweder am Raumerweiterungsmodul oder am nicht verschieblichen Teil des Aufbaus des Reisemobils befestigt sein. Dabei ist es unwesentlich, ob die Relativbewegung des Schmutzabweisers und der Dichtung an einer gemeinsamen Komponente befestigt sind oder ob beispielsweise die innenliegende Dichtung am Raumerweiterungsmodul und der außenliegende Schmutzabweiser am nicht verschieblichen Teil des Aufbaus befestigt sind. Anzumerken ist noch, dass die aufblasbare Dichtung in der Regel nur in den Endpositionen der Ausschübe aufgeblasen ist.

Des Weiteren ist es zweckmäßig, das erste und das zweite Raumerweiterungsmodul symmetrisch zur Fahrzeuglängsachse im Aufbau anzuordnen. Anhand dieser Anordnung kann gewährleistet werden, dass im ausgefahrenen Zustand der Raumerweiterungsmodule eine annähernd ausgeglichene Statik des geparkten Reisemobils erreicht werden kann. Der Begriff symmetrisch zur Fahrzeuglängsachse bezieht sich im Wesentlichen auf die Tiefe der Raumerweiterungsmodule. Demnach ist es nicht zwingend erforderlich, dass die symmetrisch zur Fahrzeuglängsachse im Aufbau angeordneten Raumerweiterungsmodule als solche spiegelsymmetrisch zueinander ausgeführt sind. Die Erstreckung des Raumerweiterungsmoduls in Höhe und Länge der Seitenfläche des Reisemobils kann sich voneinander unterscheiden.

Ferner ist es vorteilhaft, am Aufbau wenigstens einen Antrieb symmetrisch zur Fahrzeuglängsachse ausgerichtet zu befestigen, der so ausgestaltet ist, dass er zwei Raumerweiterungsmodule gleichzeitig quer zur Fahrzeuglängsachse bewegen kann. Optional kann hier mittels einer Getriebeeinheit ausgewählt werden, ob ein oder beide, oder mehrere Raumerweiterungsmodule gleichzeitig oder sequenziell bewegt werden sollen. Entscheidend ist hier das Vorhandensein eines Motors je Antrieb, wodurch die Komplexität des Gesamtsystems reduziert werden kann. In einer besonders bevorzugten Weiterbildung der Erfindung befinden sich insgesamt vier Antriebe im nicht beweglichen Teil des Aufbaus in den Ecken zweier spiegelsymmetrisch zu einer vertikalen Fahrzeugmittelachse gegenüberliegenden Raumerweiterungsmodule. Gemäß dieser Weiterbildung ermöglicht dieser Antrieb eine gleichzeitige oder sequentielle Krafteinleitung in die gegenüberliegenden Ecken zweier Raumerweiterungsmodule.

Nachfolgend wird die Erfindung anhand von in der Zeichnung gezeigten Ausführungsbeispielen näher erläutert. Darin zeigen schematisch:
- Fig. 1: eine perspektivische Darstellung eines ersten Ausführungsbeispiels eines erfindungsgemäßen Reisemobils mit einem eingefahrenen Raumerweiterungsmodul;
- Fig. 2: eine perspektivische Darstellung des in Fig. 1 gezeigten Reisemobils mit einem ausgefahrenen Raumerweiterungsmodul;
- Fig. 3: einen horizontalen Längsschnitt durch den Aufbau des in Fig. 1 gezeigten Reisemobils mit eingefahrenem Raumerweiterungsmodul;
- Fig. 4: den in Fig. 3 gezeigten horizontalen Längsschnitt bei ausgefahrenen Raumerweiterungsmodulen;
- Fig. 5: einen horizontalen Längsschnitt durch den Aufbau eines erfindungsgemäßen Reisemobils gemäß einer zweiten Ausführungsform mit eingefahrenen Raumerweiterungsmodulen;
- Fig. 6: den in Fig. 5 gezeigten horizontalen Längsschnitt bei ausgefahrenen Raumerweiterungsmodulen;
- Fig. 7: eine perspektivische Außenansicht eines Aufbaus für ein erfindungsgemäßes Reisemobil mit ausgefahrenen Raumerweiterungsmodulen aus einer Sicht von schräg unten;
- Fig. 8: eine Detaildarstellung einer erfindungsgemäßen Aufstiegshilfe;
- Fig. 9.1: einen zur Fahrzeuglängsachse orthogonalen Querschnitt eines Aufbaus mit eingefahrenen Raumerweiterungselementen;
- Fig. 9.2: den in Fig. 9.1 gezeigten Bereich A in vergrößerter Darstellung;
- Fig. 9.3: den in Fig. 9.1 gezeigten Bereich B in vergrößerter Darstellung;
- Fig. 9.4: den in Fig. 9.1 gezeigten Bereich C in vergrößerter Darstellung;
- Fig. 10.1: einen zur Fahrzeuglängsachse orthogonalen Querschnitt eines Aufbaus mit ausgefahrenen Raumerweiterungselementen;
- Fig. 10.2: den in Fig. 10.1 gezeigten Bereich A in vergrößerter Darstellung;
- Fig. 10.3: den in Fig. 10.1 gezeigten Bereich B in vergrößerter Darstellung;
- Fig. 10.4: den in Fig. 10.1 gezeigten Bereich C in vergrößerter Darstellung;
- Fig. 11: eine vergrößerte Darstellung der Figur 10.1;
- Fig. 12: die in Fig. 9.1 gezeigten Bereiche A und B in vergrößerter Darstellung mit Antriebseinheit;
- Fig. 13: die in Fig. 10.1 gezeigten Bereiche A und B in vergrößerter Darstellung mit Antriebseinheit;
- Fig. 14: einen Schnitt durch die in Fig. 13 gezeigte Antriebseinheit; und
- Fig. 15: ein Ausführungsbeispiel eines Halteschwertes.

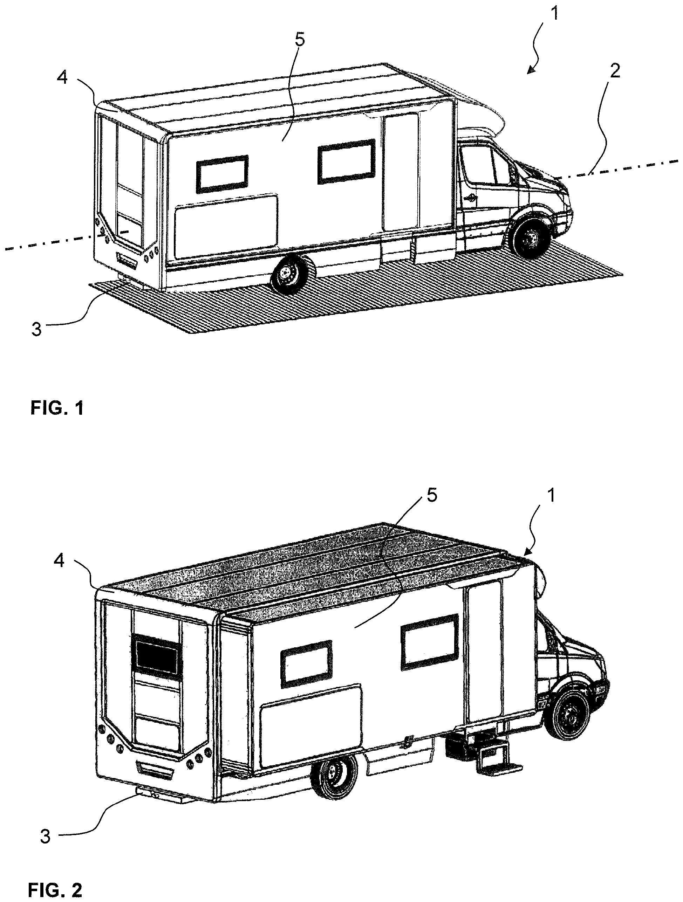

Fig. 1 zeigt ein erfindungsgemäßes Reisemobil 1 anhand einer perspektivischen Darstellung. Es weist eine Fahrzeuglängsachse 2 und ein Fahrzeugchassis 3 auf, auf dem ein sich in Fahrzeuglängsachse 2 erstreckender Aufbau 4 aufgebaut ist. Der Aufbau 4 weist an seiner Seite ein Raumerweiterungsmodul 5 auf, welches quer zur Fahrzeuglängsachse 2 verschieblich am feststehenden Teil des Aufbaus 4 befestigt ist. Das Raumerweiterungsmodul 5 erstreckt sich in dem gezeigten Ausführungsbeispiel zumindest annähernd über die gesamte Länge und Höhe einer Längsseite des Aufbaus 4 des Reisemobils 1.

Im in Fig. 1 dargestellten Zustand befindet sich das Raumerweiterungsmodul 5 in eingefahrener Position. Eine ausgefahrene Position des Raumerweiterungsmoduls 5 ist in Fig. 2 dargestellt.

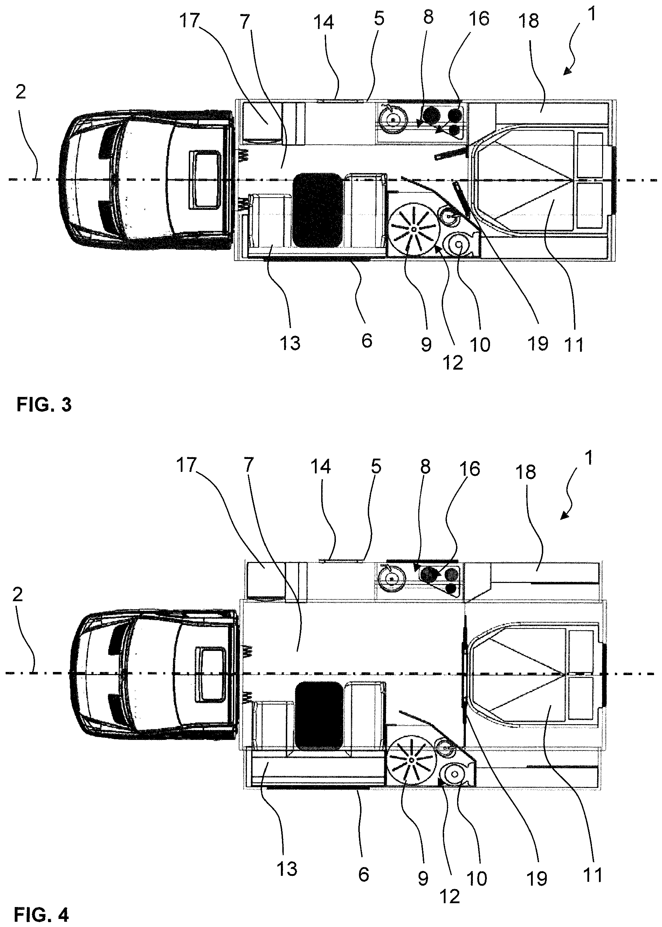

Der Innenraum des ersten Ausführungsbeispiels eines erfindungsgemäßen Reisemobils ist in den Fig. 3 und Fig. 4 dargestellt. Gezeigt ist jeweils ein horizontaler Längsschnitt durch den Aufbau 4 des Reisemobils 1. Das Reisemobil 1 weist neben dem ersten Raumerweiterungsmodul 5 und ein gegenüberliegendes zweites Raumerweiterungsmodul 6 auf. Die beiden Raumerweiterungsmodule 5 und 6 sind spiegelsymmetrisch zur Fahrzeugmitte ausgeführt.

Aus Fig. 3 ist ersichtlich, dass im eingefahrenen Zustand der Raumerweiterungsmodule 5 und 6 immer noch ein Durchgang 7 vorhanden ist, der einen Zugang zumindest zu Teilen der Möblierung ermöglicht. So können im eingefahrenen Zustand der Raumerweiterungsmodule 5 und 6 beispielsweise die Küche 8, die Dusche 9, die Toilette 10 und/oder das Bett 11 erreicht werden. Im gezeigten Ausführungsbeispiel sind die Dusche 8 und die Toilette 10 in einem Bad 12 zusammengefasst.

Erfindungsgemäß ist ein großer Teil, vorliegend sogar der überwiegende Teil, der Möblierung innerhalb der Raumerweiterungsmodule 5 und 6 befestigt. In der gezeigten Ausführungsform entspricht die Tiefe der Raumerweiterungsmodule der baulich bedingten Tiefenerstreckung der Küchenmöbel, die Teil der Küche 8 sind. Demnach wird in einem ausgefahrenen Zustand der Raumerweiterungsmodule 5 und 6 die Küche 8 vollständig quer zur Fahrzeuglängsachse nach außen verschoben, wodurch sich der Durchgang 7 im Innenraum des Aufbaus 4 deutlich vergrößert. Die Summe der Tiefen der Raumerweiterungsmodule 5 und 6 ist in der gezeigten Ausführungsform kleiner als die Breite des Aufbaus 4 des Reisemobils 1. So ist gewährleistet, dass im eingefahrenen Zustand der Raumerweiterungsmodule 5 und 6 ein Durchgang 7 mit einer Breite von mindestens 50 cm vorhanden ist.

Im zweiten Raumerweiterungsmodul 6 ist ein quer zur Fahrzeuglängsachse ausgerichtetes Sitzmöbel 13 angeordnet, welches sich sowohl mit dem Raumerweiterungsmodul 6 nach außen verschieben lässt, als auch quer zur Fahrzeuglängsachse 2 erweiterbar ist.

Die Möblierung ist in dem gezeigten Ausführungsbeispiel folgendermaßen aufgeteilt. In dem ersten Raumerweiterungsmodul 5 ist ein Eingang 14, sowie eine nicht dargestellte Aufstiegshilfe 15, eine Küchenzeile 16, ein Kühlschrank 17 und ein Schrank 18 angeordnet. Im zweiten Raumerweiterungsmodul 6 ist ein Schrank 18, ein Sitzmöbel 13 sowie eine im Slideout 6 angeordnete aber in den festen Aufbau hineinragende Nasszelle 12 angeordnet. Zudem ist im hinteren Teil des Fahrzeugs ein nicht verschiebliches Bett 11 parallel zur und entlang der Fahrzeuglängsachse 2 angeordnet. Das als Doppelbett ausgeführte Bett 11 ragt in einem eingefahrenen Zustand der Raumerweiterungsmodule 5 und 6 teilweise in diese hinein.

Des Weiteren weist die in den Fig. 3 und Fig. 4 dargestellte Ausführungsform zwei teleskopische Wandelemente 20 auf, welche zweiteilig ausgebildet sind. Die teleskopische Führung ermöglicht eine Anpassung der Wandflächen quer zur Fahrzeuglängsachse 2. Dies ist insbesondere hilfreich, um im ausgefahrenen Zustand der Raumerweiterungsmodule 5 und 6 eine Wand zwischen dem feststehenden Teil des Aufbaus 4 und den Raumerweiterungsmodulen 5 und 6 auszubilden. Zudem ist das Wandelement 1 im eingefahrenen Zustand um eine Hochachse schwenkbar, wobei das Wandelement 20 am nicht verschieblichen Teil des Aufbaus befestigt ist.

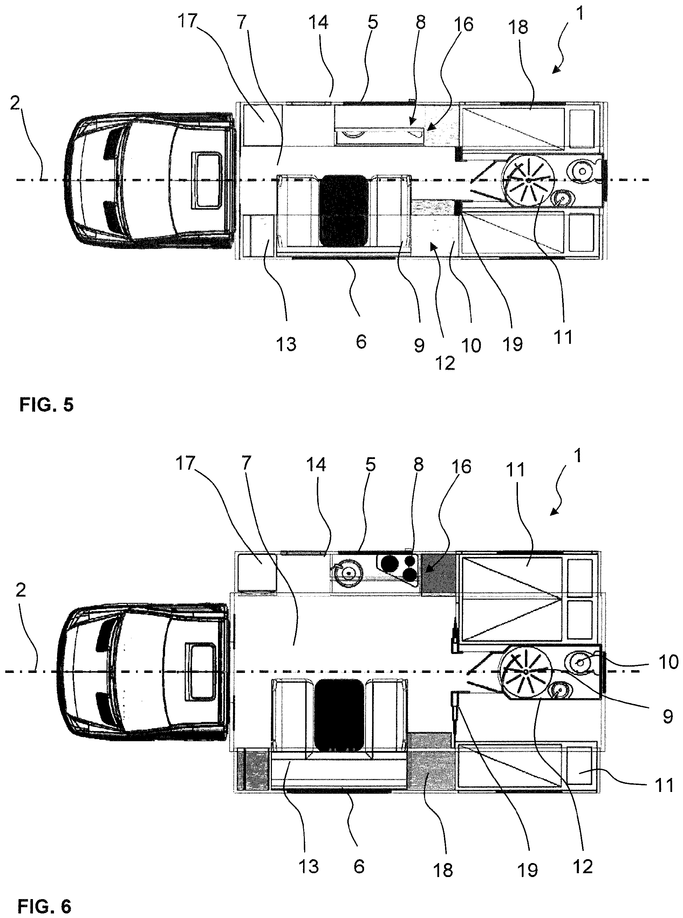

Eine zweite Ausführungsform des erfindungsgemäßen Reisemobils 1 ist in den Fig. 5 und Fig. 6 erneut als ein horizontaler Längsschnitt gezeigt. Das Reisemobil 1 weist wieder zwei Raumerweiterungsmodule 5 und 6 auf, die beide symmetrisch zur Fahrzeuglängsachse ausgeführt sind. Auch hier ist wieder ein überwiegender Teil der Möblierung innerhalb der Raumerweiterungsmodule 5 und 6 angeordnet. Wie bei der ersten Ausführungsform ist auch hier durch geschickte Anordnung der Möbel und Formgebung der Slideouts 5, 6 ein Durchgang 7 ausgebildet, der einen Zugang zu wesentlichen Teilen der Möblierung ermöglicht.

In der zweiten Ausführungsform entspricht die Tiefe der Raumerweiterungsmodule 5, 6 der Tiefe der Möbel, die Teil der Küche 8 sind. Demnach wird im ausgefahrenen Zustand der Raumerweiterungsmodule 5 und 6 die Küche 8 vollständig quer zur Fahrzeuglängsachse nach außen verschoben, wodurch sich der Durchgang 7 im Innenraum des Aufbaus 4 deutlich vergrößert. Die Summe der Tiefen der Raumerweiterungsmodule 5 und 6 ist in der gezeigten Ausführungsform kleiner als die Breite des Aufbaus 4 des Reisemobils 1. So ist erneut gewährleistet, dass im eingefahrenen Zustand der Raumerweiterungsmodule 5 und 6 ein Durchgang 7 mit einer Breite von mindestens 50 cm vorhanden ist.

Im zweiten Raumerweiterungsmodul 6 ist ein quer zur Fahrzeuglängsachse ausgerichtetes Sitzmöbel 13 angeordnet, welches sich sowohl mit dem Raumerweiterungsmodul 6 nach außen verschieben lässt, als auch quer zur Fahrzeuglängsachse 2 erweiterbar ist. Die Möblierung ist in dem gezeigten Ausführungsbeispiel folgendermaßen aufgeteilt:

Im ersten Raumerweiterungsmodul 5 ist ein Eingang 14, sowie eine nicht dargestellte Aufstiegshilfe 15, eine Küchenzeile 16, ein Kühlschrank 17 und ein Bett 11 angeordnet.

Im zweiten Raumerweiterungsmodul 6 ist ein Schrank 18 oder Küchenschrank 19, ein Sitzmöbel 13 sowie ein zweites Bett 11 angeordnet. Zudem ist im hinteren Teil des Fahrzeugs ein nicht verschiebliches Bad 12 parallel zur und entlang der Fahrzeuglängsachse 2 angeordnet.

Beide Betten 11 sind jeweils in den Raumerweiterungsmodulen 5 und 6 befestigt, wobei das Bett 11 des ersten Raumerweiterungsmoduls 5 als Doppelbett quer zur Fahrzeuglängsachse erweiterbar ist.

Des Weiteren weist die in den Fig. 5 und Fig. 6 dargestellte Ausführungsform ein teleskopisches Wandelement 20 auf, wobei die teleskopische Führung eine Wandflächenanpassung in einer Richtung quer zur Fahrzeuglängsachse 2 ermöglicht. Dies ist insbesondere hilfreich, um im ausgefahrenen Zustand der Raumerweiterungsmodule 5 und 6 eine geschlossenflächige Wand zu erzielen. Zudem ist das Wandelement 19 im eingefahrenen Zustand um eine Hochachse schwenkbar, wobei das Wandelement 20 am nicht verschieblichen Teil des Aufbaus 4 befestigt ist.

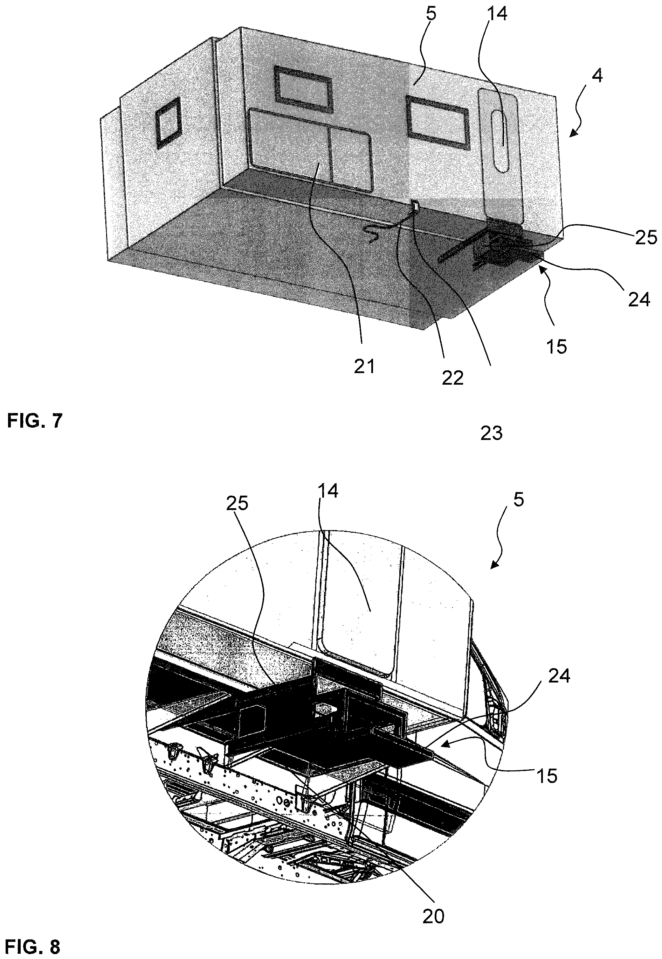

Fig. 7 zeigt eine perspektivische Außenansicht eines Aufbaus 4 für ein erfindungsgemäßes Reisemobil 1 mit ausgefahrenen Raumerweiterungsmodulen 5 und 6. An dem ersten Raumerweiterungsmodul 5 ist eine Aufstiegshilfe 15 mit einer Führung 20 verschieblich am Fahrzeugchassis 3 und am Aufbau 4 befestigt. Im in Fig. 7 gezeigten Ausführungsbeispiel ist die Aufstiegshilfe als ausklappbare Treppe ausgebildet. Ferner sind an der Außenwand des Raumerweiterungsmoduls ein Eingang 14 sowie ein Staukasten 21 vorgesehen. In der in Fig. 7 gezeigten Ausführungsform ist der Staukasten als eine von außen zugängliche Garage ausgeführt, die sich unterhalb des nicht dargestellten Betts 11 in den Innenraum hineinerstreckt.

Zudem ist eine flexible Ver- und Entsorgungsleitung 22 am Boden außerhalb des ersten Raumerweiterungsmoduls 5 verlaufend angeordnet, welche mittels eines Profils 23 eine Verbindung zur Küche 8 herstellt. In der Versorgungsleitung kann sowohl Abwasser aus der Küche abgeleitet, als auch Frischwasser aus einem nicht dargestellten Tank 24 zugeführt werden. In einer weiteren, nicht dargestellten Ausführungsform ist die Ver- oder Entsorgungsleitung 23 verschiebbar und/oder teleskopierbar ausgeführt.

Die Aufstiegshilfe 15 ist in der in Fig. 8 gezeigten Ausführungsform als ausklappbare Treppe 24 ausgeführt. Die Treppe 24 ist zusammen mit dem Treppenkasten 25 außen an dem Raumerweiterungsmodul 5 befestigt und wird über eine Führung 21 am Chassis 3 des Aufbaus 4 geführt.

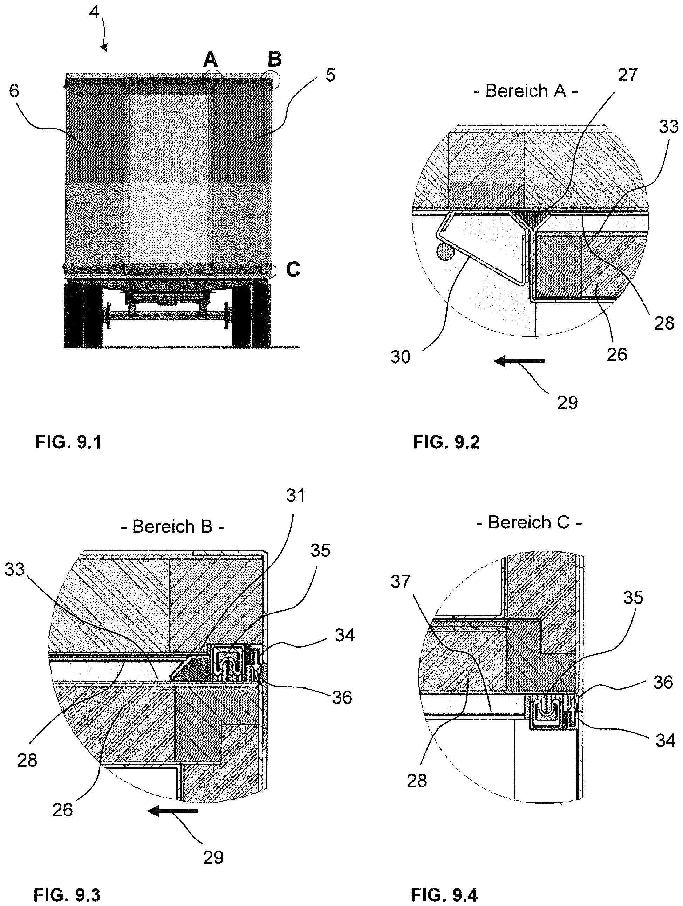

Die Figuren 9.1 bis 9.4 zeigen schematisch einen zur Fahrzeuglängsachse 1 orthogonalen Querschnitt durch den Aufbau 4 mit eingefahrenen Raumerweiterungsmodulen 5 und 6. Dabei stellt Fig. 9.1 eine Übersicht dar mit drei gekennzeichneten Bereichen A, B und C, die jeweils in den Figuren Fig. 9.2 (Bereich A), Fig. 9.3 (Bereich B) und Fig. 9.4 (Bereich C) vergrößert dargestellt sind.

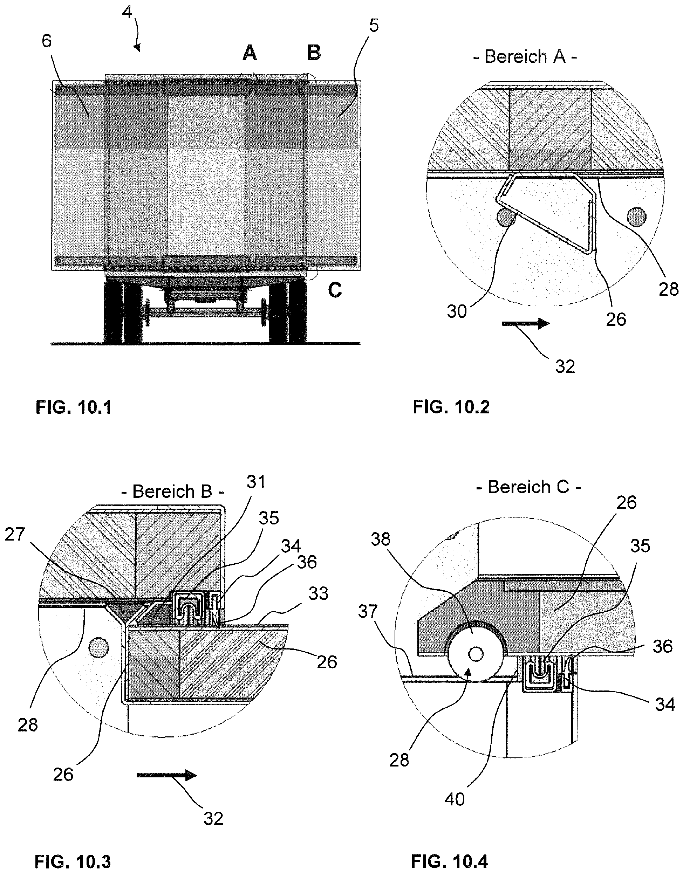

Analog zu den Darstellungen der Figuren Fig. 9.1 bis 9.4 zeigen die Figuren 10.1 bis 10.4 den gleichen Querschnitt des Aufbaus 4, jedoch mit ausgefahrenen Raumerweiterungsmodulen 5 und 6. Die Bereiche A, B und C sind identisch zu den Bereichen der Figuren 9.1 bis 9.4, allerdings werden durch die relativ bewegten Raumerweiterungsmodule 5 und 6 andere Komponenten sichtbar.

Fig. 9.2 zeigt mit Bereich A einen mittleren Abschnitt des Dachs des feststehenden Teils des Aufbaus 4, an dessen Innenseite das Dach des Raumerweiterungsmoduls 5 anliegt. Im in Fig. 9.2 dargestellten eingefahrenen Zustand des Raumerweiterungsmoduls 5 ist im Bereich A die umlaufende Innenkante 26 des Raumerweiterungsmoduls 5 erkennbar. Zwischen der umlaufenden Innenkante 26 und dem Dach des Aufbaus 4 ist ein Gleitlager zur gleitenden Lagerung des Raumerweiterungsmoduls 5 im feststehenden Teil des Aufbaus 4 angeordnet. Das Gleitlager umfasst unter anderem einen am Raumerweiterungsmodul 5 angebrachten, bewegten Gleitkörper 27, der auf einer feststehenden Gleitfläche 28, die auf dem feststehenden Teil des Aufbaus 4 ausgebildet ist, gleitet. In dem gezeigten Ausführungsbeispiel gleitet der zum Beispiel aus PTFE bestehende Gleitkörper 27 auf einer oberflächenbehandelten Edelstahl-Gleitfläche 28. Zur Begrenzung der Relativbewegung in Einfahrrichtung 29 dient eine Stoppvorrichtung 30, die auf dem feststehenden Teil des Aufbaus 4 befestigt ist und einen Anschlag für die umlaufende Innenkante des Raumerweiterungsmoduls 5 ausbildet. Fig. 10.2 zeigt den Bereich A in einer ausgefahrenen Position des Raumerweiterungsmoduls 5.

Fig. 9.3 zeigt mit Bereich B einen äußeren Abschnitt des Dachs des feststehenden Teils des Aufbaus 4, an dessen Innenseite das Dach des Raumerweiterungsmoduls 5 anliegt. Im Bereich B weist das Gleitlager einen zusätzlichen, am feststehenden Teil des Aufbaus 4 befindlichen feststehenden Gleitkörper 31 auf, der zugleich als Anschlag für eine Ausfahrrichtung 32 dient. Der feststehende Gleitkörper 31 gleitet auf einer Gleitfläche 33, die auf der umlaufenden Innenseite 26 des Raumerweiterungsmoduls 5 ausgebildet ist.

Das Gleitlager besteht demnach im Wesentlichen aus einer feststehenden Gleitfläche 28, auf der ein Gleitkörper 27 gleitet und einem feststehenden Gleitkörper 31, der auf einer Gleitfläche 33 gleitet. Die feststehenden Komponenten sind am dem feststehenden Teil des Aufbaus 4 befestigt, die bewegten Komponenten am angrenzenden Raumerweiterungsmodul.

In der gezeigten Ausgestaltungsform weist der bewegte Gleitkörper 27 einen zur Gleitfläche konisch breiter werdenden Querschnitt auf, welcher von einem Y-Profil an dem Raumerweiterungselement 5 gehalten wird. Der feststehende Gleitkörper 31 weist eine zur Abschrägung des bewegten Gleitkörpers 27 komplementäre Abschrägung auf und ist an einer Innenseite des feststehenden Teil des Raumerweiterungsmoduls 5 befestigt. Fig. 10.3 verdeutlicht das Eingreifen des beweglichen Gleitelements 27 in das feststehende Gleitelement 33, wodurch die maximale Ausfahrposition des Raumerweiterungsmoduls 5 definiert ist.

Im Bereich B sind zwischen dem Gleitlager und der Umgebung ein Schmutzabweiser 34 sowie eine Dichtung 35 ausgeführt. In der gezeigten Ausführungsform sind der Schmutzabweiser 34 und die Dichtung 35 zusammen mit dem feststehenden Gleitelement 31 an der Innenseite des feststehenden Teils des Raumerweiterungsmoduls 5 befestigt. Der Schmutzabweiser 34 bildet im Wesentlichen eine elastische Schmutzlippe 36 aus, die für einen ausgefahrenen Zustand des Raumerweiterungsmoduls 5 auf der bewegten Gleitfläche 33 mit einer angemessenen Vorspannung aufliegt. Räumlich innen, hinter dem Schmutzabweiser befindet sich die Dichtung 35, welche im gezeigten Ausführungsbeispiel als aufblasbare, umlaufende Dichtung ausgeführt ist.

Fig. 9.2 zeigt mit Bereich C einen äußeren Abschnitt des Bodens des feststehenden Teils des Aufbaus 4, entlang dem der Boden des Raumerweiterungsmoduls 5 ein- und ausgefahren wird. Die Fig. 9.2 dargestellten, umlaufenden Komponenten Schmutzabweiser 34 und Dichtung 35 grenzen im Bereich C an eine Abrollfläche 37, welche ebenfalls an einem feststehenden Bereich des Aufbaus 4 ausgebildet ist. In Fig. 10.4, die den ausgefahrenen Zustand des Raumerweiterungselements 5 darstellt, befindet sich ein Wälzkörper 38 eines Rollenlagers 39 unmittelbar, jedoch ohne Berührungskontakt an einem Anschlagsteg 40, welcher an die Dichtung 35 grenzt.

In den bisherigen Ausführungen wurde beispielhaft auf das erste Raumerweiterungsmodul 5 eingegangen. Die beschriebenen Merkmale gelten ferner auch für das zweite sowie weitere Raumerweiterungsmodule.

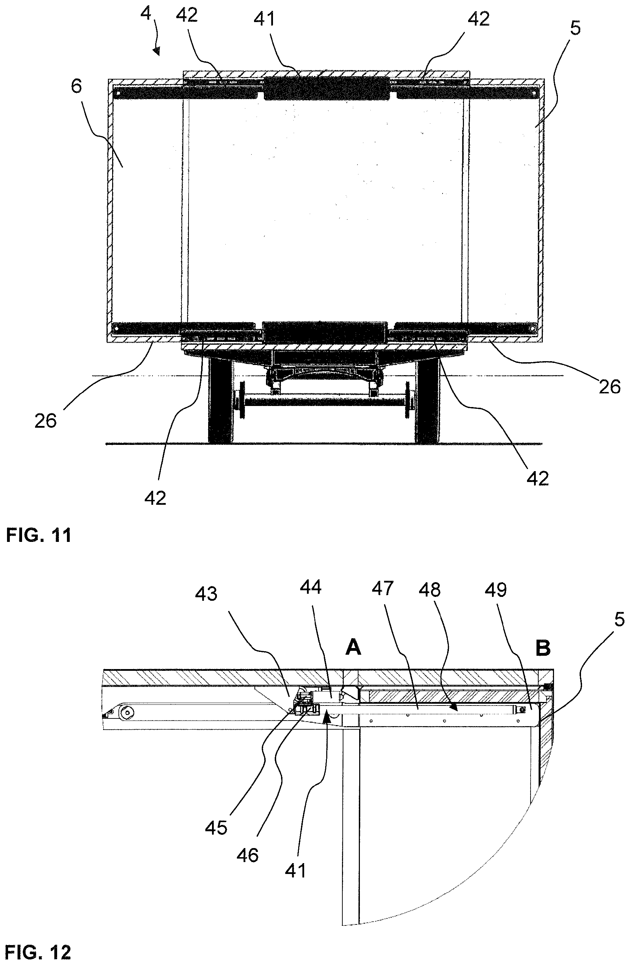

Fig. 11 zeigt eine vergrößerte Ansicht des Querschnitts gemäß Fig. 10.1. Zur Realisierung der Ein- und Ausfahrbewegung der Raumerweiterungsmodule 5 und 6 ist ein Antrieb 41 vorgesehen, welcher im gezeigten Fall als Spindelantrieb ausgeführt ist. Die Relativbewegung der Raumerweiterungsmodule 5 und 6 erfolgt über Führungselemente 42, die mit dem feststehenden Teil des Aufbaus 4 verschieblich verbunden sind. In der gezeigten Ausführungsform ist der Antrieb 41 sowie die Führungselemente 42 als eine Baugruppe ausgeführt, die im Innenraum des Aufbaus 4 angeordnet ist.

Insgesamt sind vier einzelne Baugruppen zur Bewegung der Raumerweiterungsmodule 5, 6 vorgesehen, wobei die Baugruppen jeweils in den Ecken der Raumerweiterungsmodule 5 und 6 angebracht sind. Durch die separate und mittels Wegsensoren geregelte Ansteuerung der einzelnen Baugruppen kann eine Verklemmung der Raumerweiterungsmodule 5 und 6 mit dem feststehenden Teil des Aufbaus 4 verhindert werden.

Fig. 12 zeigt nochmals eine vergrößerte Teildarstellung der Ansicht gemäß Fig. 9.1. Dargestellt sind die beiden Bereiche A und B, jedoch in einer Schnittebene, die zusätzlich den Antrieb 41 mit abbildet. Gezeigt ist der Aufbau 4 mit einem eingefahrenen Raumerweiterungsmodul 5. Der Antrieb 41 ist hier als Spindelantrieb ausgeführt, welcher mit einem Antriebssitz 43 auf dem feststehenden Teil des Aufbaus befestigt ist. Ferner umfasst der Antrieb 41 einen Elektromotor 44, der über eine Getriebeeinheit 45 eine Spindel 46 bewegt. Die Spindel 46 bildet zusammen mit einem Führungsrohr 47 eine Teleskoplanze 48 aus, welche mittels eines hier als Halteschwert bezeichneten Verankerungsblechs 49 am Raumerweiterungsmodul 5 befestigt ist. In der gezeigten Ausführungsform ist der Antrieb 41 in einer Ecke des Aufbaus 4 ausgeführt, wodurch der Raumverlust durch die beschriebenen Komponenten zum Ein- und Ausfahren des Raumerweiterungsmoduls 5 minimal gehalten wird.

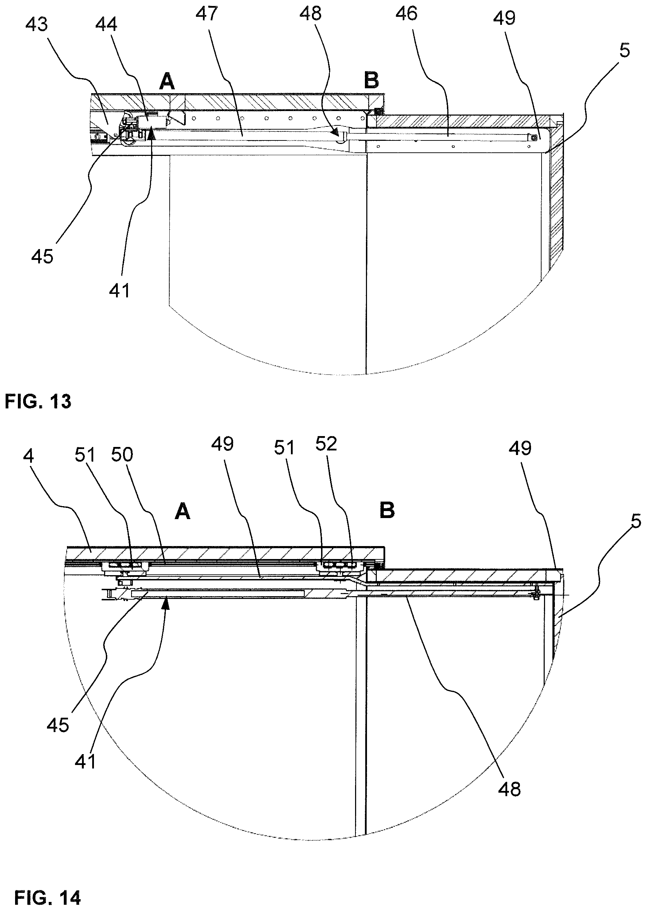

Fig. 13 und Fig. 14 zeigen den identischen Bereich des Aufbaus wie Fig. 12, jedoch mit ausgefahrenem Raumerweiterungsmodul 5. Diese Darstellungen verdeutlicht insbesondere, wie die Spindel 46 zusammen mit dem Führungsrohr 47 die Teleskoplanze 48 ausbildet. Die Spindel 46 verläuft im Inneren des Führungsrohrs 47 bis zur Getriebeeinheit 45, die über eine Verzahnung mit der Spindel 46 kämmt.

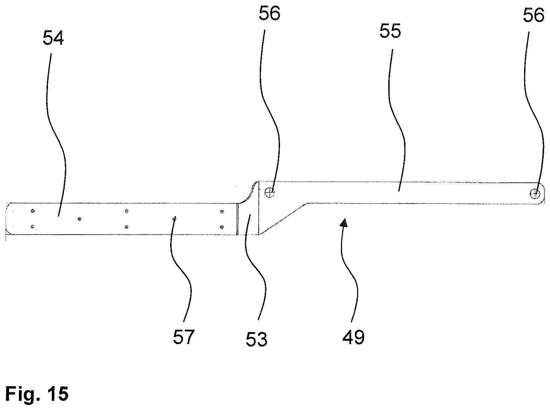

Wie man dann insbesondere der Schnittdarstellung in Fig. 14 entnehmen kann, weist das Führungselement 49 eine Führungsschiene 50 auf, an der das Halteschwert über zwei Schlitten 51 verschieblich befestigt ist. Die Schlitten 51 weisen ihrerseits jeweils drei Rollen auf, um die Kräfte in die Führungsschienen 50 bei geringer Reibung einzuleiten.
Wie man den Darstellungen in Fig. 14 und Fig. 15 entnehmen kann, weist das Halteschwert 49 bevorzugt eine Kröpfung 53 auf. Dieser Versprung sorgt dafür, dass das Halteschwert mit seinem Haltebereich 54 am Slideout 5 flächig anliegen kann und es so trotz seiner schlanken Bauweise eine hohe Tragfähigkeit bei geringem Gewicht hat. Auch der Platzbedarf ist äußerst gering und aufgrund der über die gesamten Fläche des Haltebereichs 54 verteilten Schraubenlöcher 57 ist das Halteschwert flächig an der Wand des Slideouts 5 festgelegt.

Auf der anderen Seite der Kröpfung 53 befindet sich der Haltebereich 55 mit zwei größeren Bohrungen 56 zur Befestigung der Schlitten 50. Die Bohrungen sind hier deshalb so groß, damit Exzenter in diese eingesetzt werden können, über die die Einbaulage des Halteschwertes 49 bzw. des daran befestigten Slideouts 5 feinjustiert werden kann.

### Bezugszeichen

- 1.: Reisemobil
- 2.: Fahrzeuglängsachse
- 3.: Chassis
- 4.: Aufbau
- 5.: Erstes Raumerweiterungsmodul
- 6.: Zweites Raumerweiterungsmodul
- 7.: Durchgang
- 8.: Küche
- 9.: Dusche
- 10.: Toilette
- 11.: Bett
- 12.: Bad
- 13.: Sitzmöbel
- 14.: Eingang
- 15.: Aufstiegshilfe
- 16.: Küchenzeile
- 17.: Kühlschrank
- 18.: Schrank
- 19.: Wandelement
- 20.: Führung
- 21.: Staukasten
- 22.: Ver- und Entsorgungsleitung
- 23.: Profil
- 24.: Treppe
- 25.: Treppenkasten
- 26.: Umlaufende Innenkante
- 27.: Bewegter Gleitkörper
- 28.: Feststehende Gleitfläche
- 29.: Einfahrrichtung
- 30.: Stoppvorrichtung
- 31.: Feststehender Gleitkörper
- 32.: Ausfahrrichtung
- 33.: Bewegte Gleitfläche
- 34.: Schmutzabweiser
- 35.: Dichtung
- 36.: Schmutzlippe
- 37.: Abrollfläche
- 38.: Wälzkörper
- 39.: Rollenlagers
- 40.: Anschlagsteg
- 41.: Antrieb
- 42.: Führungselemente
- 43.: Antriebssitz
- 44.: Elektromotor
- 45.: Getriebeeinheit
- 46.: Spindel
- 47.: Führungsrohr
- 48.: Teleskoplanze
- 49.: Verankerungsblech bzw. Halteschwert
- 50.: Führungsschiene
- 51.: Schlitten
- 52.: Rolle im Schlitten
- 53.: Kröpfung
- 54.: Befestigungsbereich Slideout
- 55.: Befestigungsbereich Schlitten
- 56.: Exzenterloch
- 57.: Schraubenloch

## Patentansprüche

1. Reisemobil (1) mit einer Fahrzeuglängsachse (2) und einem auf einem Fahrzeugchassis (3) angeordneten und sich in Fahrzeug-längsachse (2) erstreckenden Aufbau (4), wobei der Aufbau (4) wenigstens ein an ihm quer zur Fahrzeuglängsachse (2) verschieblich befestigtes Raumerweiterungsmodul (5, 6) aufweist, welches sich zumindest annähernd entlang der gesamte Länge und Höhe einer Längsseite des Aufbaus (4) erstreckt,
wobei am Aufbau (4) und/oder an einem Raumerweiterungsmodul (5, 6) wenigstens vier Antriebe (41) zur Bewegung des wenigstens eines Raumerweiterungsmoduls (5, 6) quer zur Fahrzeuglängsachse (2) angeordnet sind und wenigstens ein Antrieb als Spindelantrieb ausgebildet ist,
wobei das wenigstens eine Raumerweiterungsmodul über jeweils wenigstens vier Führungselemente (42) mit dem Aufbau (4) verschieblich verbunden ist, und ein Führungselement (42) jeweils eine Führungsschiene (50) mit wenigstens einem daran beweglich befestigten Schlitten (51) und ein am Schlitten (51) befestigtes Halteschwert (49) aufweist und die Verbindung von Schlitten (51) und Halteschwert (49) unter Zwischenschaltung eines Justiermittels erfolgt.

2. Reisemobil (1) nach Anspruch 1,
**dadurch gekennzeichnet, dass**
wenigstens je zwei Antriebe (41) und Führungselemente (42) im Bodenbereich und wenigstens je zwei Antriebe (41) und Führungselemente (42) jeweils oben an der Front- bzw. an der Heckwand angeordnet sind.

3. Reisemobil (1) nach einem der Ansprüche 1 oder 2,
**dadurch gekennzeichnet, dass**
die Antriebe (41) elektronisch synchronisiert sind und vorzugsweise eine lastabhängige Notabschaltung aufweisen.

4. Reisemobil (1) nach einem der vorhergehenden Ansprüche,
**dadurch gekennzeichnet, dass**
die einem Raumerweiterungsmodul (5, 6) zugeordneten Antriebe (41) eine Antriebsleistung aufweisen, die in ihrer Gesamtheit maximal so groß ist, dass eine Bewegung des Raumerweiterungsmoduls (5, 6) händisch, vorzugsweise unter Verwendung einer mechanischen Notbetätigungshilfe, möglich ist.

5. Reisemobil (1) nach einem der vorhergehenden Ansprüche,
**dadurch gekennzeichnet, dass**
wenigstens eine, bevorzugt alle, Führungsschiene(n) (50) direkt an einer Decke, einer Wand und/oder einem Boden des Aufbaus (4) befestigt ist bzw. sind.

6. Reisemobil (1) nach einem der vorhergehenden Ansprüche,
**dadurch gekennzeichnet, dass**
wenigstens ein, bevorzugt alle, Halteschwert(er) (49) direkt an einer Decke, einer Wand und/oder einem Boden eines Raumerweiterungsmoduls (5,6) befestigt ist bzw. sind.

7. Reisemobil (1) nach einem der vorhergehenden Ansprüche,
**dadurch gekennzeichnet, dass**
im Bereich der Befestigung der Führungsschiene (50) und/oder des Halteschwertes (49) ein Schaumstoff mit erhöhter Festigkeit in der betreffenden Decke, Wand und/oder Boden des Aufbaus (4) und/oder des Raumerweiterungsmoduls (5, 6) angeordnet ist.

8. Reisemobil (1) nach einem der vorhergehenden Ansprüche,
**dadurch gekennzeichnet, dass**
wenigstens ein Schlitten (51) wenigstens zwei Wälzkörper (52) aufweist, über die er mit der Führungsschiene (50) in Verbindung steht.

9. Reisemobil (1) nach einem der vorhergehenden Ansprüche,
**dadurch gekennzeichnet, dass**
die Verbindung von Schlitten (51) und Halteschwert (49) unter Zwischenschaltung eines als Exzenter ausgebildeten Justiermittels erfolgt.

10. Reisemobil (1) nach einem der vorhergehenden Ansprüche,
**dadurch gekennzeichnet, dass**
wenigstens ein Halteschwert (49) eine Kröpfung (53) aufweist.

11. Reisemobil (1) nach einem der vorhergehenden Ansprüche,
**dadurch gekennzeichnet, dass**
am Aufbau (4) und an wenigstens einem Raumerweiterungsmodul (5, 6) wenigstens ein Zug- und/oder Druckkräfte aufnehmendes Krafteinleitungsmittel zur Krafteinleitung eines mechanischen Notbetätigungsmittels, insbesondere einer Zug-Druckvorrichtung, vorgesehen ist.

12. Reisemobil (1) nach einem der vorhergehenden Ansprüche,
**dadurch gekennzeichnet, dass**
die Antriebe (41) und Führungselemente (42) im Innenraum des Aufbaus (4) bzw. des zumindest eines Raumerweiterungsmoduls (5, 6) angeordnet sind.

13. Reisemobil (1) nach einem der vorhergehenden Ansprüche,
**dadurch gekennzeichnet, dass**
ein Antrieb (41) und ein Führungselement (42) jeweils in einer Antriebs- und Aufhängungsbaugruppe zusammengefasst sind.

14. Reisemobil (1) nach einem der vorhergehenden Ansprüche,
**dadurch gekennzeichnet, dass**
zwischen dem feststehenden Teil des Aufbaus (4) und einem Raumerweiterungsmodul (5, 6) wenigstens ein Gleitlager zur gleitenden Lagerung des Raumerweiterungsmoduls (5, 6) angeordnet ist, das vorzugsweise einen Gleitkörper (26, 31) aus einem Gleitwerkstoff, insbesondere PTFE, aufweist, der mit einer ihm gegenüberliegend angeordneten Gleitfläche (28, 33) zusammenwirkt.

15. Reisemobil (1) nach einem der vorhergehenden Ansprüche,
**dadurch gekennzeichnet, dass**
zwischen dem feststehenden Teil des Aufbaus (4) und einem Raumerweiterungsmodul (5, 6) wenigstens ein Rollenlager (39) zur rollenden Lagerung des Raumerweiterungsmoduls (5, 6) angeordnet ist.

## Claims

1. A motorhome (1) having a vehicle longitudinal axis (2) and a superstructure (4) that is arranged on a vehicle chassis (3) and extends in the vehicle longitudinal axis (2), wherein the superstructure (4) has at least one space expansion module (5, 6) that is displaceably attached to it transverse to the vehicle longitudinal axis (2) and extends at least approximately along the entire length and height of a longitudinal side of the superstructure (4), wherein at least four drives (41) for moving the at least one space expansion module (5, 6) transverse to the vehicle longitudinal axis (2) are arranged on the superstructure (4) and/or on a space expansion module (5, 6) and at least one drive is configured as a spindle drive, wherein the at least one space expansion module is displaceably connected to the superstructure (4) via at least four guiding elements (42) each and a guiding element (42) each has a guide rail (50) with at least one slide (51) moveably attached thereto and a holding blade (49) attached to the slide (51) and the slide (51) and the holding blade (49) are connected by interposing an adjusting means.

2. The motorhome (1) according to claim 1,
**characterized in that**
at least two drives (41) and guiding elements (42) each are arranged in the floor area and at least two drives (41) and guiding elements (42) each are arranged on top of the front and rear walls, respectively.

3. The motorhome (1) according to any of claims 1 or 2,
**characterized in that**
the drives (41) are electronically synchronized and preferably have a load-controlled emergency cut-out.

4. The motorhome (1) according to any of the preceding claims,
**characterized in that**
the drives (41) assigned to a space expansion module (5, 6) have a driving power that in total is at most as large that the movement of the space expansion module (5, 6) can be performed manually, preferably using a mechanical emergency actuation aid.

5. The motorhome (1) according to any of the preceding claims,
**characterized in that**
at least one, preferably all guide rails (50) is/are directly attached to a ceiling, a wall, and/or a floor of the superstructure (4).

6. The motorhome (1) according to any of the preceding claims,
**characterized in that**
at least one, preferably all holding blades (49) is/are directly attached to a ceiling, a wall, and/or a floor of a space expansion module (5, 6).

7. The motorhome (1) according to any of the preceding claims,
**characterized in that**
a foamed plastic of increased strength is arranged in the concerned ceiling, wall, and/or floor of the superstructure (4) and/or of the space expansion module (5, 6) in the area of attachment of the guide rail (50) and/or of the holding blade (49).

8. The motorhome (1) according to any of the preceding claims,
**characterized in that**
at least one slide (51) has at least two rolling members (52) via which it is connected to the guide rail (50).

9. The motorhome (1) according to any of the preceding claims,
**characterized in that**
the slide (51) and the holding blade (49) are connected by interposing one adjusting means configured as an eccentric.

10. The motorhome (1) according to any of the preceding claims,
**characterized in that**
at least one holding blade (49) has a throw (53).

11. The motorhome (1) according to any of the preceding claims,
**characterized in that**
at least one force application means absorbing tensile and/or compressive forces is provided on the superstructure (4) and on at least one space expansion module (5, 6) for applying the force of a mechanical emergency actuation means, especially a tension-compression device.

12. The motorhome (1) according to any of the preceding claims,
**characterized in that**
the drives (41) and the guiding elements (42) are arranged in the interior of the superstructure (4) or the at least one space expansion module (5, 6), respectively.

13. The motorhome (1) according to any of the preceding claims,
**characterized in that**
a drive (41) and a guiding element (42) each are combined in a driving and suspension assembly.

14. The motorhome (1) according to any of the preceding claims,
**characterized in that**
between the stationary part of the superstructure (4) and a space expansion module (5, 6) at least one sliding bearing for slidingly supporting the space expansion module (5, 6) is arranged that preferably has a sliding member (26, 31) of a sliding material, especially PTFE, that interacts with an opposite sliding surface (28, 33).

15. The motorhome (1) according to any of the preceding claims,
**characterized in that**
between the stationary part of the superstructure (4) and a space expansion module (5, 6) at least one roller bearing (39) for rollingly supporting the space expansion module (5, 6) is arranged.

## Revendications

1. Camping-car (1) comprenant une axe longitudinal (2) de véhicule et une carrosserie (4) qui est disposée sur le châssis (3) de véhicule et qui s'étend dans l'axe longitudinal (2) de véhicule, ladite carrosserie (4) comprenant au moins un module (5, 6) d'extension d'espace attaché à celle-ci de façon mobile en translation dans une direction transversale à l'axe longitudinal (2) de véhicule, ledit module s'étendant au moins approximativement sur toute la longueur et toute la hauteur du côté longitudinal de la carrosserie (4),
au moins quatre organes d'entrainement (41) étant disposés sur ladite carrosserie (4) et/ou sur un module (5, 6) d'extension d'espace pour faire déplacer ledit au moins un module (5, 6) d'extension d'espace dans une direction transversale à l'axe longitudinal (2) de véhicule, et au moins un organe d'entrainement étant réalisé dans la forme d'un entraînement à tige filetée,
ledit au moins un module d'extension d'espace étant relié à la carrosserie (4) de façon mobile en translation, chacun, par au moins quatre éléments de guidage (42), et chaque élément de guidage (42) comprenant un rail de guidage (50) avec un chariot (51) attaché à celui-ci de façon mobile et un profilé de retenue (49) attaché audit chariot (51), et la connexion entre le chariot (51) et le profilé de retenue (49) étant réalisée en interposant des moyens d'ajustage.

2. Camping-car (1) selon la revendication 1,
**caractérisé en ce que**
chacun d'au moins deux organes d'entrainement (41) et éléments de guidage (42) sont disposés dans la partie en bas et chacun d'au moins deux organes d'entrainement (41) et éléments de guidage (42) sont disposés dans la partie en haut, respectivement sur la paroi avant et sur la paroi arrière.

3. Camping-car (1) selon l'une quelconque des revendications 1 ou 2,
**caractérisé en ce que**
les organes d'entrainement (41) sont synchronisés électroniquement et de préférence comprennent un arrêt d'urgence déclenché en fonction de la charge.

4. Camping-car (1) selon l'une quelconque des revendications précédentes,
**caractérisé en ce que**
les organes d'entrainement (41) associés à un module (5, 6) d'extension d'espace présentent une force motrice dont la valeur totale est au maximum telle que l'on est capable de déplacer le module (5, 6) d'extension d'espace manuellement, de préférence en utilisant des moyens mécaniques auxiliaires d'actionnement d'urgence.

5. Camping-car (1) selon l'une quelconque des revendications précédentes,
**caractérisé en ce que**
au moins un, et de préférence tous les rails de guidage (50), est/sont fixé(s) directement au plafond, à une paroi, et/ou au sol de la carrosserie.

6. Camping-car (1) selon l'une quelconque des revendications précédentes,
**caractérisé en ce que**
au moins un, et de préférence tous les profilés de retenue (49), est/sont fixé(s) directement au plafond, à une paroi, et/ou au sol d'un module (5, 6) d'extension d'espace.

7. Camping-car (1) selon l'une quelconque des revendications précédentes,
**caractérisé en ce que**
dans la zone de fixation du rail de guidage (50) et/ou du profilé de retenue (49), une mousse synthétique à résistance élevée est disposée dans le plafond, une paroi, et/ou le sol de la carrosserie (4) et/ou du module (5, 6) d'extension d'espace.

8. Camping-car (1) selon l'une quelconque des revendications précédentes,
**caractérisé en ce que**
au moins un chariot (51) comprend au moins deux éléments roulants (52) par lesquels il est en contact avec le rail de guidage (50).

9. Camping-car (1) selon l'une quelconque des revendications précédentes,
**caractérisé en ce que**
la connexion entre le chariot (51) et le profilé de retenue (49) est réalisée en interposant des moyens d'ajustage en forme d'un excentrique.

10. Camping-car (1) selon l'une quelconque des revendications précédentes,
**caractérisé en ce que**
au moins un profilé de retenue (49) comprend une partie coudée (53).

11. Camping-car (1) selon l'une quelconque des revendications précédentes,
**caractérisé en ce que**
la carrosserie (4) et au moins un module (5, 6) d'extension d'espace sont munis d'au moins un organe d'application de force supportant des forces de traction et de compression qui est apte à appliquer la force de moyens mécaniques auxiliaires d'actionnement d'urgence, en particulier d'un organe de traction et de compression.

12. Camping-car (1) selon l'une quelconque des revendications précédentes,
**caractérisé en ce que**
les organes d'entrainement (41) et les éléments de guidage (42) sont disposés à l'intérieur de ladite carrosserie (4) et dudit au moins un module (5, 6) d'extension d'espace, respectivement.

13. Camping-car (1) selon l'une quelconque des revendications précédentes,
**caractérisé en ce que**
un organe d'entrainement (41) et un élément de guidage (42) sont regroupés, pour chaque cas, dans un ensemble d'entrainement et de suspension.

14. Camping-car (1) selon l'une quelconque des revendications précédentes,
**caractérisé en ce que**
entre la partie stationnaire de la carrosserie (4) et un module (5, 6) d'extension d'espace, au moins un palier lisse est disposé qui est destiné à supporter de façon glissante le module (5, 6) d'extension d'espace et qui de préférence comporte un corps coulissant (26, 31) en matériau glissant, en particulier PTFE, coopérant avec une surface de glissement (28, 33) disposée en face de celui-ci.

15. Camping-car (1) selon l'une quelconque des revendications précédentes,
**caractérisé en ce que**
entre la partie stationnaire de la carrosserie (4) et un module (5, 6) d'extension d'espace, au moins un roulement (39) est disposé qui est destiné à supporter de façon roulante le module (5, 6) d'extension d'espace.
